# EUROPEAN PATENT APPLICATION

(11) **EP 1 306 493 A1**
(43) Date of publication of application: **02.05.2003**
(21) Application number: 02023467.0
(22) Date of filing: 21.10.2002
(51) Int. Cl.: E03D 1/32, E03D 11/00, F16K 47/08

(54) **Flush tank feed valve**

(30) Priority: 23.10.2001 IT MI20012216
(71) Applicant: VALSIR S.p.A., 25078 Vestone (BS) (IT)
(72) Inventor: Varotti, Mario, 25078 Vestone (IT); Ferreira, Francisco, 25078 Vestone (IT)
(74) Representative: Jorio, Paolo

(57) **Abstract**

There is provided a feed valve (1) for a flush tank of the type having an inlet conduit (3) connected to a water mains, and an outlet conduit (5) having, at respective opposite axial ends (11, 12), a water outflow opening (13) and a relief opening (14); an auxiliary valve (40) is associated with the relief opening (14) to selectively open and close the relief opening alongside a variation in the pressure and/or level of the water in the outlet conduit (5).

## Description

The present invention relates to a flush tank feed valve.

Flush tank fill devices are known, which substantially comprise an inlet conduit connected to the water mains; a valve assembly (e.g. piston or diaphragm type, normally controlled by a float); and an outlet conduit by which water is fed into the tank. To reduce the noise level when filling the tank, a tangential or helical motion is imparted to the water flowing along the outlet conduit, and the flow section of the outlet conduit is also reduced. An example of this type of solution is described in the Applicant's Italian Patent Application n. MI2001A000026.

Solutions of this sort, however, increase the pressure of the water flowing along the outlet conduit, so that, as opposed to flowing along the designated path, the water may flow out of the top end of the outlet conduit, thus impairing operation of the device and, in particular, defeating the provisions made to reduce the noise level.

In the event of suction or a vacuum forming in the water mains, some known fill devices also have the drawback of failing to prevent the water in the tank from being sucked back along the outlet conduit to the water mains.

It is an object of the present invention to provide a flush tank feed valve designed to eliminate the aforementioned drawbacks of known solutions. More specifically, it is an object of the invention to provide a silent-operating feed valve which is also designed to prevent the water in the tank from being sucked back to the mains, and which at the same time is also cheap and easy to produce.

According to the present invention, there is provided a feed valve for a flush tank comprising an inlet conduit connected to a water mains, and an outlet conduit; the outlet conduit having a water outflow opening and a relief opening; and the feed valve being characterized by comprising an auxiliary valve associated with the relief opening to selectively open and close the relief opening alongside a variation in the pressure and/or level of the water in the outlet conduit.

The feed valve according to the invention therefore ensures the water in the outlet conduit flows along the desired path regardless of the pressure created in the outlet conduit, in particular, by a relative small flow section, so that the water flow section of the outlet conduit can be reduced to achieve a significant reduction in noise level when filling the tank.

At the same time, in the event of suction or a vacuum forming in the water mains, the risk of the water being sucked from the outlet conduit (i.e. the tank) back into the water mains is also effectively eliminated.

Moreover, the above results are achieved by means of a feed valve of straightforward, reliable operation, and which is extremely cheap and easy to produce.

A non-limiting embodiment of the present invention will be described by way of example with reference to the accompanying drawings, in which:

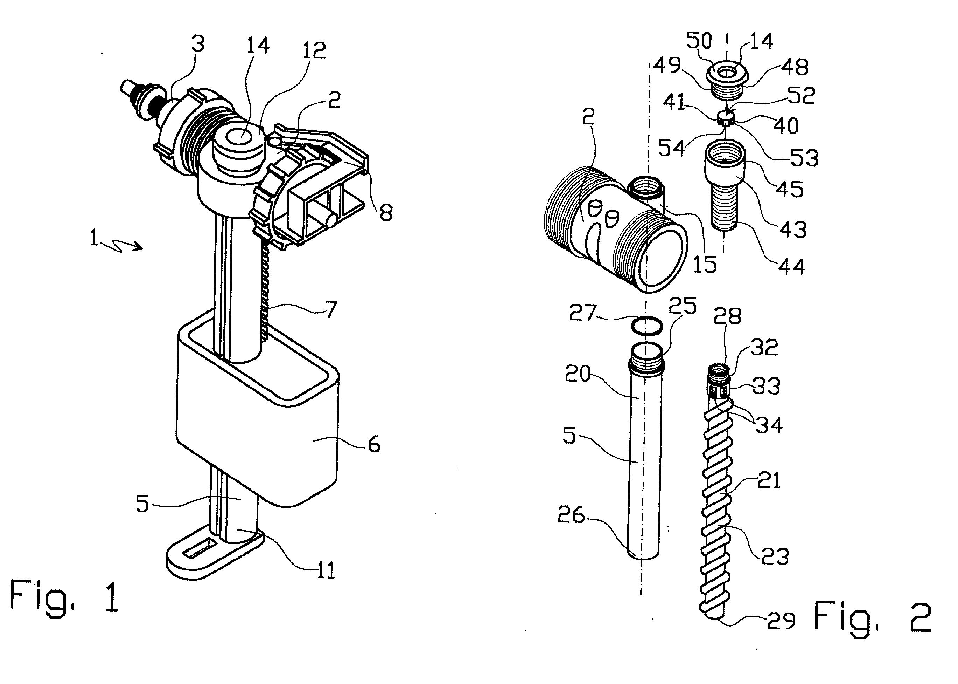

Figure 1 shows a schematic view in perspective of a feed valve in accordance with the invention;
Figure 2 shows a schematic, exploded view in perspective of a number of component parts of the Figure 1 feed valve;

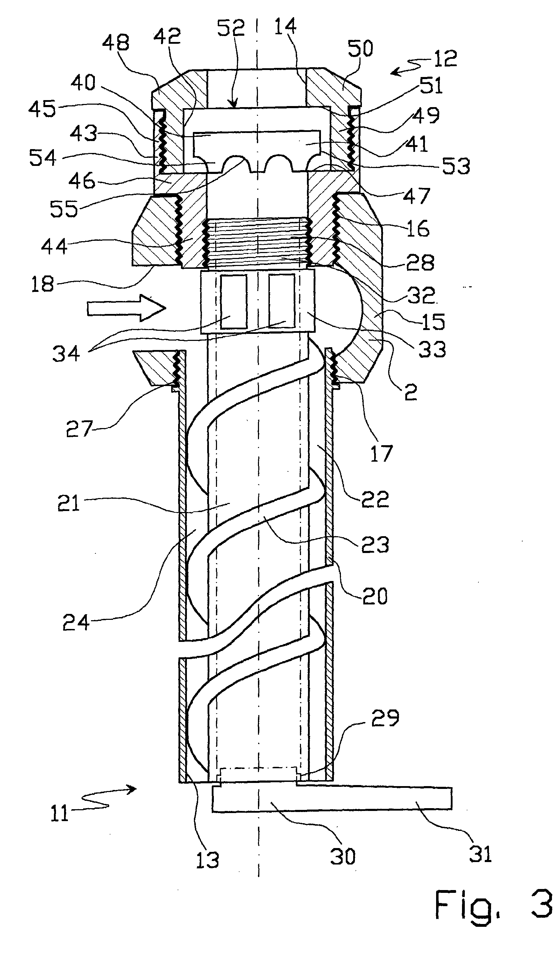

Figure 3 shows a partial schematic view, with parts in section and parts removed for clarity, of the Figure 1 feed valve.

Number 1 in the accompanying drawings indicates as a whole a feed valve for a flush tank (not shown). Feed valve 1 comprises a body 2 housing a valve assembly (e.g. a known diaphragm or counterpressure type not shown or described for the sake of simplicity); and to body 2 are connected an inlet conduit 3 connected to a water mains, and an outlet conduit 5 substantially perpendicular to inlet conduit 3 and extending, in use, substantially vertically inside the flush tank. In accordance with a known solution, outlet conduit 5 is fitted with an axially-sliding float 6 connected mechanically by an adjustable rod 7 to a lever 8 controlling the valve assembly; and the valve assembly is interposed in known manner between inlet conduit 3 and outlet conduit 5.

At respective axially opposite ends 11, 12, outlet conduit 5 has an outflow opening 13 for the water flowing in feed valve 1, and a relief opening 14; outflow opening 13 and relief opening 14 are defined by respective (e.g. circular) holes substantially aligned with each other and coaxial with outlet conduit 5; and, in use, i.e. when feed valve 1 is fitted to the flush tank, end 11 with outflow opening 13 is the bottom end of outlet conduit 5, and end 12 with relief opening 14 is the top end of outlet conduit 5.

In the non-limiting example shown, body 2 comprises a sleeve 15 for connection to outlet conduit 5; sleeve 15 comprises two open opposite axial ends 16, 17, and a radial inlet opening 18 for the water flowing in feed valve 1; and ends 16, 17 are threaded internally.

Outlet conduit 5 comprises an outer pipe 20 and an inner pipe 21 coaxial with each other and defining an annular conduit 22; and a coil 23 housed inside annular conduit 22 and coiled about inner pipe 21 to define a spiral channel 24 inside annular conduit 22.

Outer pipe 20 is open at both axial ends 25, 26; and end 25 is threaded for connection to end 17 of sleeve 15 (with the interposition of a sealing ring 27).

Inner pipe 21 has an open end 28, and an end 29, opposite end 28, closed by a plug 30. When feed valve 1 is installed, ends 28, 29 are located at the top and bottom respectively. Plug 30 is clicked or forced, for example, inside end 29 to close inner pipe 21 while leaving annular conduit 22, and therefore outflow opening 13, open, and advantageously comprises a radially elongated portion 31 acting as a spacer between outlet conduit 5 and a wall of the flush tank. Inner pipe 21 comprises, close to end 28, an externally threaded portion 32, and, adjacent to portion 32, a portion 33 having radial through slits 34 allowing water to flow into inner pipe 21.

Feed valve 1 also comprises an auxiliary valve 40 associated with and for selectively opening and closing relief opening 14 alongside variations in the pressure and/or level of the water in outlet conduit 5. More specifically, auxiliary valve 40 comprises a shutter 41 movable inside a seat 42 to selectively close relief opening 14; and seat 42 is defined inside a head 43 of outlet conduit 5. In the example shown, head 43 comprises a first tubular portion 44 having an external thread for connection to end 16 of sleeve 15, and an internal thread for connection to portion 32 of inner pipe 21; and a second tubular portion 45 connected to first tubular portion 44 by a radial flange 46 defining an annular shoulder 47 inside head 43. On the opposite side to radial flange 46, second tubular portion 45 is closed by a cap 48. Cap 48 comprises a cylindrical portion 49 for connection to tubular portion 45 (in the example shown, cylindrical portion 49 is screwed inside tubular portion 45); and an end wall 50 having relief opening 14, which is defined, in the example shown, by a circular central through hole coaxial with outlet conduit 5 and defined by an annular peripheral edge 51.

Shutter 41 is defined by a disk-shaped body housed radially loosely inside cylindrical portion 48 and having a closing surface 52 cooperating with peripheral edge 51 to close relief opening 14. Seat 42 is defined inside cylindrical portion 48 and communicates with relief opening 14.

Shutter 41 is movable inside seat 42 to selectively assume a closed position and an open position closing and opening relief opening 14 respectively; which positions are assumed by shutter 41 automatically when the water pressure in outlet conduit 5 exceeds a given value (i.e. when the water in outlet conduit 5 reaches a given level) and, respectively, when the water pressure in the outlet conduit is below the given value (i.e. when the water in outlet conduit 5 is below the given level). More specifically, shutter 41 slides axially inside seat 42 between two opposite stops defined respectively by shoulder 47 and peripheral edge 51. In the closed position, closing surface 52 rests against peripheral edge 51 to close relief opening 14; and, in the open position, shutter 41 rests on shoulder 47 to open relief opening 14.

On the opposite side to closing surface 52, circumferentially spaced projections 54 project axially from a lateral edge 53 of shutter 41; and air intake openings 55 are defined between projections 54 to connect relief opening 14 fluid-dynamically to outlet conduit 5 when shutter 41 rests on shoulder 47 (i.e. in the open position).

Feed valve 1 operates as follows:

To fill the flush tank, the water from inlet conduit 3 flows through opening 18, along spiral channel 24 in annular conduit 22, and out through outflow opening 13. Water can also flow into inner pipe 21 through radial slits 34; and, since the inner pipe is closed at the bottom by plug 30, the water fills inner pipe 21 (to substantially the same level as the water in the flush tank).

If the water flow section in spiral channel 24 is relatively small, the pressure of the water in outlet conduit 5 may rise beyond a given value, and the water, as opposed to flowing along spiral channel 24, may flow back up inside inner pipe 21 to head 43. In which case, the variation in the pressure of the water in outlet conduit 5 automatically activates auxiliary valve 40. That is, the increase in the water level in outlet conduit 5 pushes shutter 41 up into the closed position closing relief opening 14, so that the water is forced to flow along spiral channel 24.

Inner pipe 21 remains full of water even when the water in the flush tank is discharged. This has been found to further reduce the noise level when the tank is filled again.

At rest, shutter 41 is in the open position (by virtue of its own weight and the fact that the water in outlet conduit 5 is below the given level at which auxiliary valve 40 is activated) and allows air to flow from the flush tank into outlet conduit 5, 50 that, in the event of suction or a vacuum forming in the water mains, air is sucked out as opposed to the water in the flush tank.

Clearly, changes may be made to the feed valve as described and illustrated herein without, however, departing from the scope of the present invention.

## Claims

1. A feed valve (1) for a flush tank comprising an inlet conduit (3) connected to a water mains, and an outlet conduit (5); the outlet conduit having a water outflow opening (13) and a relief opening (14); and the feed valve being **characterized by** comprising an auxiliary valve (40) associated with the relief opening (14) to selectively open and close the relief opening alongside a variation in the pressure and/or level of the water in the outlet conduit (5).

2. A feed valve as claimed in Claim 1, **characterized in that** said auxiliary valve (40) is activated automatically alongside a variation in the pressure and/or level of the water in said outlet conduit (5).

3. A feed valve as claimed in Claim 2, **characterized in that** said auxiliary valve (40) comprises a shutter (41) movable inside a respective seat (42) to selectively assume a closed position and an open position respectively closing and opening said relief opening (14).

4. A feed valve as claimed in Claim 3, **characterized in that** the outflow opening (13) and the relief opening (14) are located at respective opposite axial ends (11, 12) of the outlet conduit (5).

5. A feed valve as claimed in Claim 4, **characterized in that** said relief opening (14) is defined by a hole coaxial with the outlet conduit (5) and communicating with said seat (42); said shutter (41) sliding axially inside said seat (42) between two opposite stops (47, 51).

6. A feed valve as claimed in Claim 5, **characterized in that** said shutter (41) is housed radially loosely in said seat (42).

7. A feed valve as claimed in Claim 6, **characterized in that** said shutter (41) has air intake openings (55) connecting the relief opening (14) to the outlet conduit (5) when the shutter (41) is positioned closing said relief opening (14).

8. A feed valve as claimed in any one of the foregoing Claims, **characterized in that** said outlet conduit (5) is provided internally with a spiral water flow channel (24).

9. A feed valve as claimed in Claim 8, **characterized in that** said outlet conduit (5) comprises an outer pipe (20) and an inner pipe (21) coaxial with each other and defining an annular conduit (22); and a coil (23) housed in said annular conduit (22) and defining said spiral channel (24).

10. A feed valve as claimed in Claim 9, **characterized in that** said inner pipe (21) has an open first end (28) and a closed second end (29), so as to be filled, in use, with water.

11. A feed valve as claimed in Claim 10, **characterized in that** said inner pipe (21) comprises, close to the open first end (28), radial slits (34) through which water flows into said inner pipe (21).
